Europäisches Patentamt

European Patent Office

Office européen des brevets

(11) Veröffentlichungsnummer : **0 404 282 B1**

(12) **EUROPÄISCHE PATENTSCHRIFT**

(45) Veröffentlichungstag der Patentschrift :
29.01.92 Patentblatt 92/05

(21) Anmeldenummer : **90250042.0**

(22) Anmeldetag : **13.02.90**

(51) Int. Cl.⁵ : **E04F 13/14,** E04C 2/54, C03C 17/36

(54) **Fassadenplatte, Verfahren zu ihrer Herstellung sowie Verwendung derselben.**

(30) Priorität : **20.06.89 DE 8907490 U**

(43) Veröffentlichungstag der Anmeldung :
**27.12.90 Patentblatt 90/52**

(45) Bekanntmachung des Hinweises auf die
Patenterteilung :
**29.01.92 Patentblatt 92/05**

(84) Benannte Vertragsstaaten :
**AT BE CH DE DK ES FR GB GR IT LI LU NL SE**

(56) Entgegenhaltungen :
**DE-C- 2 646 513**
**FR-A- 2 219 126**
**US-A- 3 951 525**

(73) Patentinhaber : **FLACHGLAS AKTIENGESELLSCHAFT**
**Otto-Seeling-Promenade 10-14**
**W-8510 Fürth (DE)**

(72) Erfinder : **Groth, Rolf, Dr. Dipl.-Phys.**
**Holzstrasse 218**
**W-4630 Bochum 6 (DE)**
Erfinder : **Paul, Thomas, Dr. Dipl.-Phys.**
**Flottmannstrasse 112**
**W-4690 Herne 1 (DE)**

(74) Vertreter : **Goddar, Heinz J., Dr. et al**
**FORRESTER & BOEHMERT**
**Widenmayerstrasse 4/I**
**W-8000 München 22 (DE)**

**Beschreibung**

Die Erfindung betrifft eine Fassadenplatte, insbesondere zum Verkleiden der Fassade zwischen mit Isolierglasscheiben ausgestatteten Fensteröffnungen eines Gebäudes zwecks Erzeugung einer in der Außenansicht optisch einheitlichen Glasfassade, mit einem transparenten Glasträger, der auf seiner Rückseite eine die Außenansicht der Fassadenplatte in Reflexion und Farbton an diejenige der Isolierglasscheiben angleichende Beschichtung aus einer Metalloxidschicht und einer auf diese an der dem Glasträger abgewandten Seite aufgebrachten undurchsichtigen äußeren Schicht aufweist, sowie ein Verfahren zu deren Herstellung und ihre Verwendung.

Bei der Gestaltung der Fassade von Gebäuden besteht in vielen Fällen das Bedürfnis, im nicht-lichtdurchlässigen Fassadenbereich, also zwischen den Fensteröffnungen, als Außenelemente Fassadenplatten, insbesondere beschichtete Glasscheiben, einzusetzen, welche in Helligkeit und Farbe der Außenansicht harmonisch auf den Fensterbereich abgestimmt sind. Meistens wird dabei eine weitgehende Übereinstimmung zwischen Fenster- und Brüstungsbereich angestrebt, um auf diese Weise eine Glasfassade mit einheitlichem Aussehen zu erhalten.

Im Fensterbereich erreicht man die gewünschte Farbgebung und die gegenüber normalem Fensterglas veränderte Lichtreflexion durch eine Beschichtung des Glases. Hierfür sind insbesondere halbtransparente Schichten aus Gold und Kupfer, vor allem aber Silber, geeignet, welche mit zusätzlichen Interferenzschichten zu einem Mehrschichtsystem kombiniert werden. Auf diese Weise erhält man Sonnenschutzbeschichtungen mit sehr guten technischen und optischen Werten und unterschiedlichsten Farbtönungen in der Außenansicht. Wegen ihrer Kratzempfindlichkeit und der Gefahr von Schichtveränderungen durch Einwirkung der normalen Atmosphäre werden derartige Beschichtungen ausschließlich in Verbindung mit Mehrscheiben- Isolierglas mit hermetischem Randverbund der einzelnen Scheiben eingesetzt, wobei sich die Beschichtung stets auf einer inneren Oberfläche der Glasscheiben befindet und damit gegen Verkratzungen und chemische Einwirkungen der Atmosphäre geschützt ist.

Um eine Anpassung des Brüstungsbereiches an den Fensterbereich zu erhalten, ist es bereits bekannt, dort Isolierglasscheiben gleichen Aufbaus wie im Fensterbereich einzusetzen, wobei jedoch zusätzlich auf die dem Gebäudeinneren zugewandte Scheibe eine lichtundurchlässige Email- oder Farbschicht aufgebracht wird, um den störenden Durchblick auf hinter dem betreffenden Fassadenelement liegende Wandelemente zu verhindern. Derartige Lösungen sind im Hinblick auf eine optisch einheitliche Glasfassade voll befriedigend. Allerdings sind die Kosten sehr hoch, weil auch im nicht-transparenten Fassadenbereich Isolierglas eingesetzt werden muß. Hinzu kommen wegen der zusätzlichen undurchlässigen Beschichtung auf der Innenscheibe beträchtliche Erwärmungseffekte derartiger Fassadenelemente bei Sonneneinstrahlung, welche die Lebensdauer einer solchen Einheit beeinträchtigen können und wegen der Gefahr von Hitzesprüngen die Verwendung von vorgespanntem Glas notwendig machen.

Es ist ferner bereits bekannt, für den nicht-transparenten Fassadenbereich monolithische Glasscheiben einzusetzen, die auf der Außenseite eine Oxidschicht, wie z.B. Titanoxid, als Interferenzschicht aufweisen. Mit derartigen Beschichtungen kann eine silbrige Reflexion — ggf. mit leichtem Gelb- oder Blauton — und damit eine Farbanpassung an die entsprechend reflektierenden Isolierglasscheiben des Fensterbereichs erreicht werden (vgl. DE-C-2646513). Bei derartigen Fassadenplatten ist die dem Gebäudeinneren zugewandte Rückseite der Glasscheibe mit einem undurchsichtigen Email oder einem Lack versehen, um den Durchblick auf hinter der Fassadenplatte liegende Gebäudeteile zu verhindern. Ein großer Nachteil derartiger monolithischer Fassadenplatten besteht darin, daß die Reinigung der Außenseite der Fassadenplatte mit einem erheblichen Aufwand verbunden ist. Festhaftende Verschmutzungen sind sehr schwierig zu entfernen, da in solchen Fällen Reinigungsverfahren, wie sie für unbeschichtetes Glas üblich sind, nämlich Einsatz abrasiver Mittel, Verwendung von Stahlklingen etc., nicht angewendet werden können, weil dies zu Verkratzungen der Metalloxid- Interferenzschicht führen würde.

Diese Schwierigkeiten werden bei einer Fassadenplatte der gattungsgemäßen Art, wie sie aus der US-A-3951525 vorbekannt ist, dadurch vermieden, daß wie im Fensterbereich Glasscheiben eingesetzt werden, bei denen nicht deren Außenseiten, sondern deren dem Gebäudeinneren zugewandten Rückseiten mit einer reflektierenden Metalloxidschicht versehen sind. Zum Erreichen einer Anpassung der Außenansicht von Fenster- und Brüstungsbereich wird in beiden Bereichen die gleiche Beschichtung verwendet, wobei Material und Dicke der Metalloxidschicht so ausgewählt werden, daß im Fensterbereich eine Sonnenschutzwirkung auftritt. Die Fassadenplatten weisen auf der Metalloxidschicht zusätzlich eine undurchsichtige äußere Schicht aus Email auf mit der bereits zuvor beschriebenen Aufgabe, den Durchblick auf dahinterliegende Gebäudeteile zu verhindern. Weil die Anordnung einer Emailschicht unmittelbar auf der reflektierenden Metalloxidschicht aber zur Folge hat, daß die Farbanpassung an die im Fensterbereich eingesetzten Glasscheiben mit an Luft angrenzender Metalloxidschicht verschlechtert wird, soll gemäß der Lehre der US-A-3951525 eine Kompensation zumindest teilweise dadurch erreicht werden, daß die Farbe und das Material der verwendeten äußeren Schicht aus Email geeignet ausgewählt werden.

Mit diesem Verfahren ist eine ästhetisch zufriedenstellende Anpassung zwischen Fenster- und Fassadenbereich nicht erreichbar. Im Unterschied zur Metalloxidschicht mit gerichteter Reflexion reflektieren solche Emailschichten diffus ; d.h. der Grad der Anpassung hängt von der sich örtlich und zeitlich ändernden Zusammensetzung des Himmelslichtes ab.

Zum gleichen Zweck ist es auch bekannt, anstelle von Email undurchsichtige Lacke aufzubringen oder eingefärbte Folien aus Kunststoffmaterialien aufzukleben. Das Aufbringen einer zusätzlichen äußeren Schicht aus Email, Lack oder eingefärbter Kunststoffolie auf die in der Regel pyrolytisch oder mittels Vakuumbeschichtungsverfahren aufgebrachte Metalloxidschicht ist allerdings aufwendig. Es führt wegen der unterschiedlichen Reflexion an den Grenzflächen Metalloxidschicht/Luft im Fensterbereich und Metalloxidschicht/Lack oder eingefärbte Folie wie bei den oben erwähnten Emails nicht zu voll befriedigenden technischen und optischen Werten, da eine Variation von Reflexionsgrad und Farbton über die Auswahl der äußeren Schicht nur in geringem Umfang möglich ist. Außerdem sind diese Abdunkelungsschichten der Einwirkung von Licht und UV-Strahlung durch die Glasscheibe und die teildurchlässige Metalloxidschicht hindurch ausgesetzt, was insbesondere bei Lacken und Kunststoffolien zu mangelhafter Alterungsbeständigkeit führt.

Die vorbekannten Fassadenplatten sind insbesondere dann nicht für den hinsichtlich Höhe und Farbton der Lichtreflexion anzupassenden Brüstungsbereich verwendbar, wenn im Fensterbereich Isolierglasscheiben mit den bereits oben erwähnten Sonnenschutzbeschichtungen aus Silber mit zusätzlichen Interferenzschichten zum Einsatz kommen. Für die Lichtdurchlässigkeit solcher Scheiben werden üblicherweise Werte im Bereich von etwa 30 bis 60% gefordert, verbunden mit einer silbrigen oder leicht bläulichen Außenreflexion und einem Lichtreflexionsgrad von etwa 35 bis 50%. In Durchsicht dürfen diese Scheiben keine nennenswerte Farbverschiebung hervorrufen. Durch die Gesamtheit dieser Anforderungen wird die Außenansicht der Fensterscheibe im jeweiligen Farbton so eng festgelegt, daß eine ausreichende Farbanpassung mit den bekannten Fassadenplatten nicht möglich ist.

Der Erfindung liegt die Aufgabe zugrunde, eine monolithische Fassadenplatte der eingangs genannten Art zu schaffen, welche bei wirtschaftlicher Herstellungsweise bei Betrachtung von der Glasseite, d.h. in der Außenansicht, einen mittleren Lichtreflexionsgrad im Bereich von etwa 30 bis 50% bei Farben im Bereich von silbrig bis blau hat und einen störenden Durchblick auf hinter der Fassadenplatte liegende Wandelemente verhindert, wobei der Reflexionsgrad und Farbeindruck in weitem Umfang und auf einfache Weise optisch einwandfrei und reproduzierbar variierbar sowie an die im Fensterbereich eingesetzen Glasscheiben mit Silber-Sonnenschutzbeschichtung anpaßbar sein sollen.

Erfindungsgemäß wird diese Aufgabe durch eine Fassadenplatte der gattungsgemäßen Art gelöst, welche dadurch gekennzeichnet ist, daß die äußere Schicht eine gerichtet reflektierende Schicht aus Chrom, Titan, Nickel oder Legierungen dieser Metalle, insbesondere Chrom-Nickel-Legierungen oder Edelstahl ist ; daß der Lichtreflexionsgrad der äußeren Schicht bei senkrechtem Lichteinfall, von der Glasseite her und ohne darunter liegende Metalloxidschicht gemessen, zwischen 35 und 60% beträgt ; und daß die Metalloxidschicht eine absorptionsfreie Farbanpassungsschicht mit einem Brechungsindex zwischen 1,8 und 2,4 und mit einer optischen Dicke von 60 bis 160 nm ist.

In einer bevorzugten Ausführungsform ist vorgesehen, daß die äußere Schicht aus Chrom besteht.

Eine weitere Ausführungsform der Erfindung sieht vor, daß die Metalloxidschicht aus $SnO_2$, ZnO, $In_2O_3$ $TiO_2$ oder Mischoxiden der entsprechenden Metalle besteht.

Bei einer erfindungsgemäß bevorzugten Fassadenplatte mit silbriger Außenansicht besteht die Metalloxidschicht aus $SnO_2$ in einer Dicke von 44 bis 46 nm und die äußere Schicht aus Cr in einer Dicke von mindestens 35 nm, wobei zwischen beiden Schichten eine Haftschicht aus $In_2O_3$ oder mit $SnO_2$ dotiertem $In_2O_3$ in einer Dicke von 3 bis 5 nm vorgesehen ist.

Eine andere bevorzugte Fassadenplatte mit bläulicher Außenansicht weist als Metalloxidschicht eine 61 bis 66 nm dicke $SnO_2$-Schicht sowie eine äußere, mindestens 35 nm dicke Cr-Schicht auf, wobei auch hier zwischen beiden Schichten eine Haftschicht aus $In_2O_3$ oder mit $SnO_2$ dotiertem $In_2O_3$ in einer Dicke von 3 bis 5 nm vorgesehen ist.

Es liegt im Rahmen der Erfindung, anstelle der Metalloxidschicht zwei oder mehr Teilschichten aus verschiedenen Metalloxiden vorzusehen, deren optische Gesamtdicke im für die Metalloxidschicht beanspruchten Bereich liegt. Bei der Herstellung des erfindungsgemäßen Schichtsystems mittels Magnetron-Kathodenzerstäubung hat es sich darüberhinaus als vorteilhaft erwiesen, auf der Metalloxidschicht eine dünne Schicht aus gegebenenfalls dotiertem Indiumoxid anzuordnen. Hierdurch läßt sich die Haftung der äußeren Schicht zum Teil wesentlich verbessern, wenn die Metalloxidschicht zum Beispiel aus $SnO_2$ besteht. Die optische Dicke der Metalloxidschicht ist in diesem Fall entsprechend zu reduzieren.

Fassadenplatten nach der Erfindung lassen sich in besonders vorteilhafter Weise dadurch herstellen, daß die Metalloxidschicht und/oder die äußere Schicht auf den Glasträger durch Vakuumbeschichtung aufgebracht wird/werden.

Dabei kann vorgesehen sein, daß das Aufbringen der Metalloxidschicht und/oder der äußeren Schicht im MAGNETRON-Kathodenzerstäubungsverfahren erfolgt.

Es kann so vorgegangen werden, daß die Metalloxidschicht durch reaktive MAGNETRON-Zerstäubung von metallischen Targets in sauerstoffhaltiger Atmosphäre aufgebracht wird.

Besonders vorteilhaft ist es, wenn, wie dies eine weitere Ausführungsform der Erfindung vorsieht, die äußere Schicht unmittelbar im Anschluß an das Aufbringen der Metalloxidschicht durch MAGNETRON-Zerstäubung in einer im wesentlichen sauerstofffreien Atmosphäre aufgebracht wird.

Bevorzugt läßt sich eine Fassadenplatte nach der Erfindung zum Aufbau einer Glasfassade verwenden, bei der im Fensterbereich transparente Glasscheiben mit Silber-Sonnenschutzbeschichtung mit einer Lichtreflexion in Außenansicht von etwa 35 bis 50% eingesetzt sind.

Der Erfindung liegt die überraschende Erkenntnis zugrunde, daß es gelingt, eine Fassadenplatte mit den geforderten Eigenschaften zu erhalten, indem an der dem Gebäudeinneren zugewandten Seite des monolithischen Glasträgers aufeinanderfolgend eine absorptionsfreie Farbanpassungs-Metalloxidschicht und eine äußere, gerichtet reflektierende Metall- bzw. Metallegierungsschicht nach der Erfindung aufgebracht werden, wobei sich durch das Zusammenspiel dieser beiden Schichten auf wirtschaftliche Weise die gewünschten optischen Eigenschaften überraschend genau und reproduzierbar einstellen lassen.

Auf die vorzugsweise im wirtschaftlichen MAGNETRON-Zerstäubungsverfahren insgesamt aufgebrachte Beschichtung braucht keine zusätzliche Abdunkelungsschicht aufgebracht zu werden, z.B. in Form eines eingefärbten Lackes oder einer aufgeklebten, dunkel eingefärbten Folie, z.B. aus Polyester oder Polyethylen. Es liegt allerdings im Rahmen der Erfindung, die Schichtseite der Glasscheibe beispielsweise zum Schutz vor Beschädigungen beim Transport oder beim Einbau zusätzlich wie üblich mit einer Schutzschicht oder Schutzfolie abzudecken. Die Beschichtung hat langzeitig eine ausreichende Beständigkeit gegenüber der Einwirkung der Atmosphäre, wobei insbesondere die Feuchtigkeitsbeständigkeit von Bedeutung ist, weil sich auf der Innenseite derartiger Fassadenplatten häufig Wasserkondensat abscheidet. Es hat sich überraschenderweise gezeigt, daß die erfindungsgemäß vorgesehene undurchsichtige Metall- bzw. Metallegierungsschicht der Gesamtbeschichtung die erforderliche Korrosionsbeständigkeit gegenüber Einflüssen der Umgebungsluft, insbesondere Wasserkondensatfilmen, verleiht, ohne daß noch eine zusätzliche Schutzschicht notwendig wäre. Dies ist gänzlich unerwartet, weil durch reaktive MAGNETRON-Kathodenzerstäubung hergestellte Metalloxidschichten der erfindungsgemäß vorgesehenen Art als solche keineswegs die notwendige Feuchtraumbeständigkeit aufweisen. Setzt man z.B. $SnO_2$-Schichten einem Feuchtraumtest bei 40°C und 100% relativer Luftfeuchtigkeit aus, so zeigt sich bereits nach etwa 60 Stunden beginnende Korrosion. Nach 150 Stunden hat sich die Beschichtung großflächig abgelöst. Ein entsprechender Test bei 70°C führt bereits nach 60 Stunden Einwirkungszeit zu großflächigen Schichtablösungen. Ein ähnliches Verhalten zeigen auch die anderen erfindungsgemäß beanspruchten Metalloxidschichten.

Bei dem erfindungsgemäßen Schichtsystem ergibt sich demgegenüber eine ganz erhebliche Verbesserung der Feuchtraumbeständigkeit. So konnten nach 2000 Stunden bei 70°C und 100% relativer Luftfeuchtigkeit noch keine Schichtveränderungen festgestellt werden. Diese hohe Korrosionsbeständigkeit ist überraschend ; denn man wird erwarten, daß zumindest über die immer vorhandenen "pinholes" in der Metall- bzw. Metalllegierungsschicht Feuchtigkeit eindiffundiert und die darunterliegende feuchtigkeitsempfindliche Metalloxidschicht angegriffen und selbst auch an der Grenzfläche zum Glasträger unterwandert wird, so daß es in diesen Bereichen zu Schichtablösungen kommt. Diese hohe Korrosionsbeständigkeit der Beschichtung ist insbesondere auch deswegen überraschend, weil unter den genannten Testbedingungen das für solche Anwendungen eingesetzte Natron-Kalk-Silikatglas selbst nicht mehr korrosionsbeständig ist. So zeigt sich bei 70°C und 100% relativer Luftfeuchtigkeit bereits beginnende Oberflächenkorrosion des unbeschichteten Glases nach 200 Stunden Einwirkungszeit.

Durch die erfindungsgemäße Beschichtung wird damit die Korrosionsbeständigkeit des Glasträgers um mehr als eine Zehnerpotenz verbessert. Das ist ein sehr wichtiges Kriterium für den Einsatz solcher Fassadenplatten, insbesondere dann, wenn sich zwischen der Fassadenplatte und dahinterliegendem Isolationsmaterial ein Luftzwischenraum befindet, der nicht vollständig hinterlüftet ist, wie das bei einer Warmfassade der Fall ist. Unter solchen Bedingungen reicht die Korrosionsbestandigkeit von üblichem Natron Kalk-Silikatglas nicht aus, um langzeitig eine Korrosion der Glasoberfläche zu verhindern.

Die erfindungsgemäße Beschichtung ergibt eine über Erwarten gute Anpassung in der Farbe und in der Höhe der Lichtreflexion an den Fensterbereich, wenn im letzteren Silber-Sonnenschutzschichten mit für diese Anwendungen optimalen Werten in Reflexion, Transmission und einer weitgehend farbneutralen Durchsicht eingesetzt werden. Diese optische Übereinstimmung ist besonders gut, wenn für die äußere Metall- bzw. Metalllegierungsschicht bei der Fassadenplatte nach der Erfindung Chrom verwendet wird.

Weitere Merkmale und Vorteile der Erfindung ergeben sich aus der nachstehenden Beschreibung, in der Ausführungsbeispiele unter teilweiser Bezugnahme auf die schematische, nicht-maßstäbliche Zeichnung im einzelnen erläutert sind.

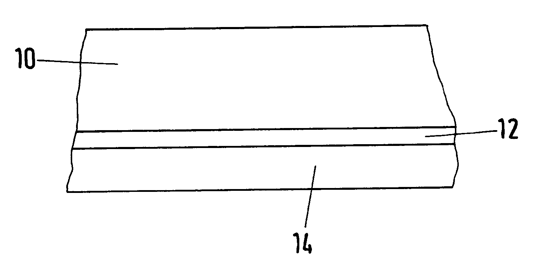

Wie die Zeichnung erkennen läßt, weist das Ausfuhrungsbeispiel nach der Erfindung einen transparenten Glasträger 10, aus Silikatglas bestehend, auf, auf dessen in der Zeichnung untere, nach dem Einbau dem Gebäudeinneren zugewandte Innenseite aufeinanderfolgend im MAGNETRON-Kathodenzerstäubungsverfahren eine Metalloxidschicht 12 und eine äußere Metall- bzw. Metallegierungsschicht 14 aufgebracht sind, wobei es sich bei der Metalloxidschicht 12 bei dem gezeigten Ausführungsbeispiel um eine $SnO_2$-Schicht und bei der äußeren Schicht 14 um eine Chromschicht handelt.

Fassadenplatten nach der Erfindung lassen sich nach den nachstehend beschriebenen Ausführungsbeispielen herstellen.

Beispiel 1 :

In einer Vakuum-Beschichtungsanlage, welche mit Beschichtungseinrichtungen für MAGNETRON-Kathodenzerstäubung ausgerüstet war, wurden auf eine Floatglasscheibe aus Natron-Kalk-Silikatglas von 4 mm Dicke im Format 40 cm × 40 cm nacheinander folgende Schichten aufgebracht :
— Eine $SnO_2$-Schicht in einer Dicke von 45 nm durch reaktive Zerstäubung eines Zinn-Targets in einer Argon-Sauerstoffatmosphäre bei einem Druck von $3,5 \cdot 10^{-1}$ Pa,
— eine mit $SnO_2$ dotierte $In_2O_3$-Schicht in einer Dicke von 4 nm durch reaktive Zerstäubung eines In 90/Sn 10-Targets unter gleichen Bedingungen,
— eine Chromschicht in einer Dicke von 35 nm durch Zerstäubung eines Chromtargets in Argon-Atmosphäre bei einem Druck von $1,3 \cdot 10^{-1}$ Pa.

Die beschichtete Scheibe wies bei Betrachtung von der Glasseite ein silbriges Aussehen auf. Der Lichttransmissionsgrad war < 1%. Der Lichtreflexionsgrad (bezogen auf die Hellempfindlichkeit des menschlichen Auges und Normlichtart D65 als Bezugslichtquelle) betrug von der Glasseite bei senkrechtem Strahlungseinfall 38%.

Die Farborte in Reflexion, gemessen im L, a, b — Farbsystem (nach R. S. Hunter, Photoelectric Color Difference Meter, in : J. Opt. Soc. Am. 48 (1958) S. 985-995) lagen bei a = – 3,8 und b = 0,5.

In der Außenansicht, d.h. bei Betrachtung von der Glasseite, stimmte die beschichtete Scheibe sehr gut im Lichtreflexionsgrad und in der Farbe mit einer Isolierglasscheibe aus 2 × 4 mm Floatglas überein, bei welcher auf der dem Zwischenraum zugewandten Seite der äußeren Scheibe ein Silberschichtsystem aufgebracht war, bei dem eine Silberschicht beidseitig in Interferenzschichten eingebettet war. Diese Isolierglasscheibe hatte einen Lichtreflexionsgrad von 40%, und die L, a, b — Farbwerte lagen bei a = – 4,0 und b = 0,5. Der Lichttransmissionsgrad betrug 48%. Die Durchsicht war weitgehend ohne Farbstich, der allgemeine Farbwiedergabe-Index in Transmission $R_a$ betrug 0,95.

Beispiel 2 :

In der Vakuum-Beschichtungsanlage von Beispiel 1 wurden auf eine Floatglasscheibe von 4 mm Dicke und Abmessungen 40 cm × 40 cm nacheinander folgende Schichten aufgebracht :
— Eine $SnO_2$-Schicht von 62 nm Dicke durch reaktive Kathodenzerstäubung unter den gleichen Bedingungen wie in Beispiel 1,
— eine mit $Sn_2O_3$ dotierte $In_2O_3$-Schicht von 4 nm Dicke wie in Beispiel 1,
— eine Chrom-Schicht wie in Beispiel 1.

Die beschichtete Scheibe wies bei Betrachtung von der Glasseite ein silbrig-bläuliches Aussehen auf. Der Lichtreflexionsgrad betrug 40%, die Farb-Werte in Reflexion im L, a, b — System lagen bei a = – 4,8 und b = – 7,1.

Bezüglich des Lichtreflexionsgrades und der Farbe stimmte die Scheibe sehr gut mit einer Isolierglasscheibe aus 2 × 4 mm Floatglas überein, bei welcher auf der dem Zwischenraum zugewandten Seite ein Silberschichtsystem aufgebracht wurde, welches aus einer beidseitig in $SnO_2$-Interferenzschichten eingebetteten Silberschicht bestand. Diese Isolierglasscheibe hatte einen Lichtreflexionsgrad von 39%, und die entsprechenden Farborte im L, a, b — System lagen bei a = – 4,8 und b = – 7,6. Der Lichttransmissionsgrad der Isolierglasscheibe betrug 49%. Die Durchsicht war weitgehend ohne Farbstich. Der allgemeine Farbwiedergabe-Index betrug $R_a$ = 0,94.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

BEZUGSZEICHENLISTE

10 Glasträger
12 Metalloxidschicht (Farbanpassungsschicht)
14 äußere Schicht (Metall- bzw. Metallegierungsschicht)

**Patentansprüche**

1. Fassadenplatte, insbesondere zum Verkleiden der Fassade zwischen mit Isolierglasscheiben ausgestatteten Fensteröffnungen eines Gebäudes zwecks Erzeugung einer in der Außenansicht optisch einheitlichen Glasfassade, mit einem transparenten Glasträger, der auf seiner Rückseite eine die Außenansicht der Fassadenplatte in Reflexion und Farbton an diejenige der Isolierglasscheiben angleichende Beschichtung aus einer Metalloxidschicht und einer auf diese an der dem Glasträger abgewandten Seite aufgebrachten undurchsichtigen äußeren Schicht aufweist, dadurch gekennzeichnet, daß die äußere Schicht eine gerichtet reflektierende Schicht (14) aus Chrom, Titan, Nickel oder Legierungen dieser Metalle, insbesondere Chrom-Nickel-Legierungen oder Edelstahl ist; daß der Lichtreflexionsgrad der äußeren Schicht (14) bei senkrechtem Lichteinfall, von der Glasseite her und ohne darunter liegende Metalloxidschicht gemessen, zwischen 35 und 60% beträgt; und daß die Metalloxidschicht (12) eine absorptionsfreie Farbanpassungsschicht mit einem Brechungsindex zwischen 1,8 und 2,4 und mit einer optischen Dicke von 60 bis 160 nm ist.

2. Fassadenplatte nach Anspruch 1, dadurch gekennzeichnet, daß die äußere Schicht (14) aus Chrom besteht.

3. Fassadenplatte nach Anspruch 1 oder 2, dadurch gekennzeichnet, daß die Metalloxidschicht (12) aus $SnO_2$, ZnO, $In_2O_3$, $TiO_2$ und/oder Mischoxiden der entsprechenden Metalle besteht.

4. Fassadenplatte nach Anspruch 2 und 3 mit silbriger Außenansicht, dadurch gekennzeichnet, daß die Metalloxidschicht (12) aus $SnO_2$ in einer Dicke von 44 bis 46 nm und die äußere Schicht (14) aus Cr in einer Dicke von mindestens 35 nm besteht und zwischen beiden Schichten eine Haftschicht aus $In_2O_3$ oder mit $SnO_2$ dotiertem $In_2O_3$ in einer Dicke von 3 bis 5 nm vorgesehen ist.

5. Fassadenplatte nach Anspruch 2 und 3, mit bläulicher Außenansicht, dadurch gekennzeichnet, daß die Metalloxidschicht (12) aus $SnO_2$ in einer Dicke von 61 bis 66 nm und die äußere Schicht (14) aus Cr in einer Dicke von mindestens 35 nm besteht und zwischen beiden Schichten eine Haftschicht aus $In_2O_3$ oder mit $SnO_2$ dotiertem $In_2O_3$ in einer Dicke von 3 bis 5 nm vorgesehen ist.

6. Verfahren zum Herstellen einer Fassadenplatte nach einem der vorangehenden Ansprüche, dadurch gekennzeichnet, daß die Metalloxidschicht und/oder die äußere Schicht auf den Glasträger durch Vakuumbeschichtung aufgebracht wird/werden.

7. Verfahren nach Anspruch 6, dadurch gekennzeichnet, daß das Aufbringen der Metalloxidschicht und/oder der äußeren Schicht im MAGNETRON-Kathodenzerstäubungsverfahren erfolgt.

8. Verfahren nach Anspruch 7, dadurch gekennzeichnet, daß die Metalloxidschicht durch reaktive MAGNETRON-Zerstäubung von metallischen Targets in sauerstoffhaltiger Atmosphäre aufgebracht wird.

9. Verfahren nach Anspruch 8, dadurch gekennzeichnet, daß die äußere Schicht unmittelbar im Anschluß an das Aufbringen der Metalloxidschicht durch MAGNETRON-Zerstäubung in im wesentlichen sauerstofffreier Atmosphäre aufgebracht wird.

10. Verwendung der Fassadenplatte nach einem der Ansprüche 1 bis 5, vorzugsweise hergestellt nach einem der Ansprüche 6 bis 9, zum Aufbau einer Glasfassade, bei der im Fensterbereich transparente Glasscheiben mit Silber-Sonnenschutzbeschichtung mit einer Lichtreflexion in Außenansicht von etwa 35 bis 50% eingesetzt sind.

## Claims

1. A spandrel panel, more particularly for cladding the facade between window reveals in a building which are fitted with insulating glass panes, with the aim of producing a glass facade of unitary optical external appearance, there being provided a transparent glass support having on its back a coating adapting the external appearance of the spandrel panel in reflection and colour shade to the external appearance of the panes, the coating comprising a metal oxide layer and, disposed thereon on the side remote from the glass support, an opaque outer layer, characterised in that the outer layer is a directionally reflecting layer (14) of chromium or titanium or nickel or alloys of these metals, more particularly chromium-nickel alloys or special steel, the radiant reflectance of the outer layer (14) in response to the perpendicular incidence of light, as measured from the glass side and without a metal oxide layer below, is between 35 and 60%, and the metal oxide layer (12) has a non-absorbent colour matching layer having a refraction index between 1.8 and 2.4 and an optical thickness of 60 to 160 nm.

2. A panel according to claim 1, characterised in that the outer layer (14) consists of chromium.

3. A panel according to claim 1 or 2, characterised in that the metal oxide layer (12) consists of $SnO_2$ or ZnO or $In_2O_3$ or $TiO_2$ and/or mixed oxides of the corresponding metals.

4. A panel according to claims 2 and 3 having a silvery outer appearance, characterised in that the metal oxide layer (12) consists of $SnO_2$ in a thickness of 44 to 46 nm and the outer layer (14) consists of Cr in a thickness of at least 35 nm and an adhesive layer of $In_2O_3$ or $In_2O_3$-doped $SnO_2$ in a thickness of 3 to 5 nm is provided between the metal oxide layer (12) and the outer layer (14).

5. A panel according to claims 2 and 3 having a blue external appearance, characterised in that the metal oxide layer (12) consists of $SnO_2$ in a thickness of 61 to 66 nm and the outer layer (14) consists of Cr in a thickness of at least 35 nm and an adhesive layer of $In_2O_3$ or $In_2O_3$-doped $SnO_2$ in a thickness of 3 to 5 nm is provided between the metal oxide layer (12) and the outer layer (14).

6. A process for the preparation of a spandrel panel according to any of the previous claims, characterised in that the metal oxide layer and/or the outer layer are/is applied to the glass support by vacuum coating.

7. A process according to claim 6, characterised in that the metal oxide layer and/or the outer layer, are/is applied by magnetron cathode sputtering.

8. A process according to claim 7, characterised in that the metal oxide layer is applied by reactive magnetron sputtering of metal targets in an oxygen-containing atmosphere.

9. A process according to claim 8, characterised in that the outer layer is applied immediately after the application of the metal oxide layer by magnetron sputtering in a substantially oxygen-free atmosphere.

10. Use of the spandrel panel according to any of claims 1 to 5 and produced preferably by any of claims 6 to 9 for the construction of a glass facade in which transparent glass panes having a silver solar control coating and a light reflection when viewed externally of approximately 35 to 50% are used in the window zone.

## Revendications

1. Panneau de façade, en particulier pour l'habillage de la façade entre les baies d'un bâtiment garnies de vitres isolantes afin de produire une façade en verre d'aspect extérieur optiquement homogène, avec un support en verre transparent qui présente sur sa face envers un revêtement harmonisant, quant à la réflexion et à la teinte, l'aspect extérieur du panneau de façade avec celui des vitres isolantes, ce revêtement se composant d'une couche d'oxyde métallique et d'une couche extérieure opaque déposée sur celle-ci du côté opposé au support en verre, caractérisé en ce que la couche extérieure est une couche réfléchissante orientée (14) en chrome, titane, nickel ou en alliages de ces métaux, en particulier des alliages au chrome-nickel, ou en acier fin ; en ce que le facteur de réflexion de la lumière de la couche extérieure (14) pour une incidence perpendiculaire de la lumière, mesurée à partir de la face du verre et sans la couche d'oxyde métallique située au-dessous, se situe entre 35 et 60% ; et en ce que la couche d'oxyde métallique (12) est une couche d'harmonisation chromatique exempte d'absorption ayant un indice de réfraction de 1,8 à 2,4, l'épaisseur optique étant de 60 à 160 nm.

2. Panneau de façade suivant la revendication 1, caractérisé en ce que la couche extérieure (14) se compose de chrome.

3. Panneau de façade suivant la revendication 1 ou 2, caractérisé en ce que la couche d'oxyde métallique (12) se compose de $SnO_2$, $ZnO$, $In_2O_3$, $TiO_2$ et/ou d'oxydes mixtes des métaux en question.

4. Panneau de façade suivant les revendications 2 et 3 avec un aspect extérieur argenté, caractérisé en ce que la couche d'oxyde métallique (12) se compose de $SnO_2$ en une épaisseur de 44 à 46 nm et en ce que la couche extérieure (14) se compose de Cr en une épaisseur d'au moins 35 nm, et qu'une couche d'accrochage en $In_2O_3$ ou en $In_2O_3$ dopé au $SnO_2$, d'une épaisseur de 3 à 5 nm, est prévue entre ces deux couches.

5. Panneau de façade suivant les revendications 2 et 3 avec un aspect extérieur bleuté, caractérisé en ce que la couche d'oxyde métallique (12) se compose de $SnO_2$ en une épaisseur de 61 à 66 nm et en ce que la couche extérieure (14) se compose de Cr en une épaisseur d'au moins 35 nm, et qu'une couche d'accrochage en $In_2O_3$ ou en $In_2O_3$ dopé au $SnO_2$, d'une épaisseur de 3 à 5 nm, est prévue entre ces deux couches.

6. Procédé pour la fabrication d'un panneau de façade suivant l'une quelconque des revendications précédentes, caractérisé en ce que la couche d'oxyde métallique et/ou la couche extérieure est/sont déposée(s) sur le support en verre par dépôt sous vide.

7. Procédé suivant la revendication 6, caractérisé en ce que le dépôt de la couche d'oxyde métallique et/ou de la couche extérieure est effectué par le procédé de pulvérisation cathodique par magnétron.

8. Procédé suivant la revendication 7, caractérisé en ce que la couche d'oxyde métallique est déposée par la pulvérisation réactive par magnétron de matières métalliques cibles dans une atmosphère oxygénifère.

9. Procédé suivant la revendication 8, caractérisé en ce que la couche extérieure est déposée immédiatement après le dépôt de la couche d'oxyde métallique par pulvérisation par magnétron dans une atmosphère sensiblement exempte d'oxygène.

10. Utilisation du panneau de façade suivant l'une quelconque des revendications 1 à 5, fabriqué de préférence suivant l'une des revendications 6 à 9, pour la constitution d'une façade en verre dans laquelle sont montées, dans la zone des fenêtres, des vitres transparentes avec un revêtement à l'argent de protection contre le soleil et une réflexion de la lumière d'environ 35 à 50% vue de l'extérieur.

10 —

12

14